Europäisches Patentamt

European Patent Office

Office européen des brevets

(19)

(11) EP 0 449 363 B1

(12) **EUROPÄISCHE PATENTSCHRIFT**

(45) Veröffentlichungstag und Bekanntmachung des Hinweises auf die Patenterteilung:
03.12.1997 Patentblatt 1997/49

(51) Int Cl.⁶: **G06F 17/14**

(21) Anmeldenummer: **91200642.6**

(22) Anmeldetag: **22.03.1991**

(54) **Schaltungsanordnung zur Bestimmung der Lage von Extrem- werten einer Ähnlichkeitsfunktion**

Circuit for determining the extreme values position of a correlation function

Circuit pour déterminer la position des valeurs extrêmes d'une fonction de corrélation

(84) Benannte Vertragsstaaten:
**DE FR GB**

(30) Priorität: **26.03.1990 DE 4009610**

(43) Veröffentlichungstag der Anmeldung:
**02.10.1991 Patentblatt 1991/40**

(73) Patentinhaber:
• **Philips Patentverwaltung GmbH**
**22335 Hamburg (DE)**
Benannte Vertragsstaaten:
**DE**
• **Philips Electronics N.V.**
**5621 BA Eindhoven (NL)**
Benannte Vertragsstaaten:
**FR GB**

(72) Erfinder: **Hienerwadel, Klaus, Dipl.-Ing.**
**W-8500 Nürnberg 10 (DE)**

(74) Vertreter: **Peuckert, Hermann, Dipl.-Ing. et al**
**Philips Patentverwaltung GmbH,**
**Röntgenstrasse 24**
**22335 Hamburg (DE)**

(56) Entgegenhaltungen:
**WO-A-90/01744          SU-A- 636 619**
**US-A- 4 430 722          US-A- 4 757 464**

• **IEE PROCEEDINGS G (ELECTRONIC CIRCUITS AND SYSTEMS), AUG. 1986, UK, VOL. 133, NR. 4, PAGE(S) 227 - 230, ISSN 0143-7089 Jordan J R et al 'Microprocessor based polarity correlation using the skip algorithm'**

## Beschreibung

Die Erfindung betrifft eine Schaltungsanordnung zur Bestimmung der Lage von Extremwerten einer Ähnlichkeitsfunktion zweier in digitaler Form vorliegender Signale.

Eine derartige Schaltungsanordnung kann zum Beispiel zur Messung der zeitlichen Verschiebung zweier Sprachsignale verwendet werden. In einem solchen Falle sind die beiden Signale, deren Ähnlichkeit bestimmt werden soll, nur von einer Variablen (der Zeit) abhängig. Auch die Ähnlichkeitsfunktion selbst ist eine Funktion nur einer Variablen, nämlich der zeitlichen Verschiebung der beiden Signale gegeneinander.

Ein Anwendungsbeispiel für Signale, die von zwei Variablen abhängen, ergibt sich bei der Bildcodierung. Um bei einem Bildcodierer (vergleiche z.B. die DE 37 26 520 A1) die Bitrate zu reduzieren, wird überprüft, mit welchem Ausschnitt eines schon übertragenen Bildes (erstes Signal) ein Ausschnitt (zweites Signal) des aktuellen Bildes die größte Ähnlichkeit hat. In diesem Falle sind die Signale Funktionen von jeweils zwei Ortskoordinaten und die Ähnlichkeitsfunktion eine Funktion der beiden Verschiebungen in jeweils eine Richtung der beiden Koordinatenachsen.

Wegen der formalen Einfachheit wird im folgenden nur der Fall betrachtet werden, in dem die Signale von einer Variablen abhängen, denn eine Erweiterung auf mehrere Variable liegt für den Fachmann auf der Hand.

Unter Ähnlichkeitsfunktion A zweier in digitaler Form vorliegender Signale f und g soll hier jede Funktion der Art

$$A(\mu) = k \sum_{i=0}^{b-1} F[f(i), g(i-\mu)] \; ; \; -p \leqq \mu \leqq +p \qquad (1)$$

verstanden werden, wobei k eine Normierungskonstante, i und $\mu$ ganze Zahlen bedeuten sowie f(i) und g(i-$\mu$) die Abtastwerte der Funktionen f und g zu den Zeitpunkten darstellen, die durch die ganzen Zahlen i und i-$\mu$ symbolisiert sind. A($\mu$) ist dann ein Abtastwert der Ähnlichkeitsfunktion zum Zeitpunkt $\mu$. $\mu$ ist gleichzeitig die Verschiebung der Funktion g gegenüber ihrer Ausgangslage. Die Zahl der in Betracht gezogenen Verschiebungen $\mu$ ist begrenzt: $\mu$ kann alle ganzen Zahlen zwischen -p und p annehmen, wobei p ebenfalls ganz ist und von Anwendungsfall zu Anwendungsfall unterschiedlich groß sein kann. p legt den sogenannten Suchbereich fest, in dem z.B. nach einem Extremus von A($\mu$) gesucht wird. F bedeutet zunächst eine nicht näher gekennzeichnete Verknüpfung der beiden Funktionen f und g. b ist die Zahl der Summanden in (1).

Bei der Auswertung der Formel (1) können die Argumente der Funktion auch als Symbole der Speicheradressen gedeutet werden, unter denen der betreffende Abtastwert abgelegt ist. Welche Deutung zutreffend ist, geht aus dem Zusammenhang hervor und soll im folgenden nicht ausdrücklich genannt werden.

Wird für die Verknüpfung F das Produkt der Funktion f und g eingesetzt, so ergibt sich die Korrelationsfunktion der beiden Funktionen f und g. Für diejenige Verschiebung , für die die Korrelationsfunktion ihr Maximum annimmt, ergibt sich die größte Ähnlichkeit der beiden Funktionen f und g.

Wird für F der Betrag oder das Quadrat der Differenz eingesetzt, so ergibt sich für dasjenige $\mu$ die größte Ähnlichkeit der Funktionen f und g, für das A($\mu$) ein Minimum annimmt. Welche der Verknüpfungen F im Einzelfall zu wählen ist, hängt von den Begleitumständen des Falles ab und soll hier nicht weiter diskutiert werden.

Von Interesse sind häufig nicht nur der größte oder der kleinste Wert der Ähnlichkeitsfunktion A($\mu$) und dessen Lage $\mu$e, sondern auch im Fall eines Maximums die nächst kleineren und im Fall eines Minimums die nächst größeren Werte sowie die Lagen dieser Werte. Der Extremwert zusammen mit den nächstfolgenden Werten - wie eben angedeutet -sollen extremale Werte genannt werden.

Aus der Patentschrift US-A-4 430 722 sind ein Verfahren und eine Anordnung zur Korrelation zweier Signale bekannt, bei dem Funktionswerte beider Signale miteinander multipliziert und daraus diskrete Werte der Korrelationsfunktion ermittelt werden, wobei zur schnellen Ermittlung der Korrelationsfunktion die Abtastfrequenz des einen Signals ein Vielfaches der Abtastfrequenz des anderen Signals ist.

In einer Ausführungsform wird die Korrelation mit einer Unterabtastung der beiden Signale im Verhältnis 1:k durchgeführt, wenn die Soll-Abtastfrequenz durch die ursprünglich vorgegebenen Zeitpunkte bestimmt ist.

Bei der direkten Auswertung der Formel (1) ist bei der Bestimmung der extremalen Werte und deren Lagen 2pb+b Mal die Verknüpfung F für verschiedene Werte der Funktion f und g zu bestimmen. Das kann für manche Anwendungsfälle einen erheblichen Rechenaufwand bedeuten.

Der Erfindung liegt die Aufgabe zugrunde, eine Schaltungsanordnung der eingangs genannten Art anzugeben, durch die der Rechenaufwand zur Bestimmung der Extremwerte und ihrer Lagen der Ähnlichkeitsfunktion erheblich reduziert wird.

Diese Aufgabe wird durch im Kennzeichen des Anspruchs 1 angegebene Merkmale gelöst. Vorteilhafte Ausgestaltungen enthalten die Unteransprüche.

Anhand der Figuren soll ein Ausführungsbeispiel der Erfindung näher erläutert werden.

Fig. 1 stellt ein Prinzipschaltbild der erfindungsgemäßen Schaltung dar,

Fig. 2 stellt einen bekannten Korrelator dar, wie er in der erfindungsgemäßen Schaltung verwendet werden kann und in

Fig. 3 sind Diagramme abgebildet, die der Erläuterung der Funktionsweise der erfindungsgemäßen Schaltung dienen.

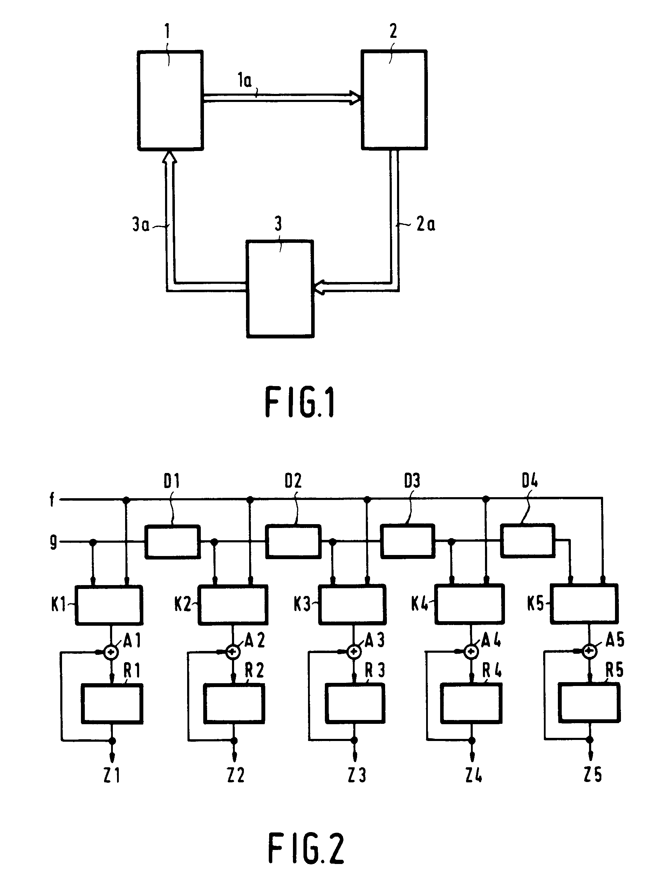

Zentraler Baustein der Schaltung nach Fig. 1 ist eine Adreßsteuerung 3, die durch Berechnung von Schreib- und Leseadressen die Schreib- und Lesevorgänge eines Schreib-Lese-Speichers 1 über Adreßleitungen 3a steuert. Für die Erläuterung der Erfindung spielt das Einschreiben eine untergeordnete Rolle, so daß darauf nicht näher eingegangen wird.

Im vorliegenden Beispiel hat b nach Formel (1) den Wert 16 und p den Wert 8. Abtastwerte von f sind im Speicher 1 unter ersten Adressen 0 bis 15 abgelegt und Abtastwerte von g unter zweiten Adressen, die von -8 bis 23 laufen.

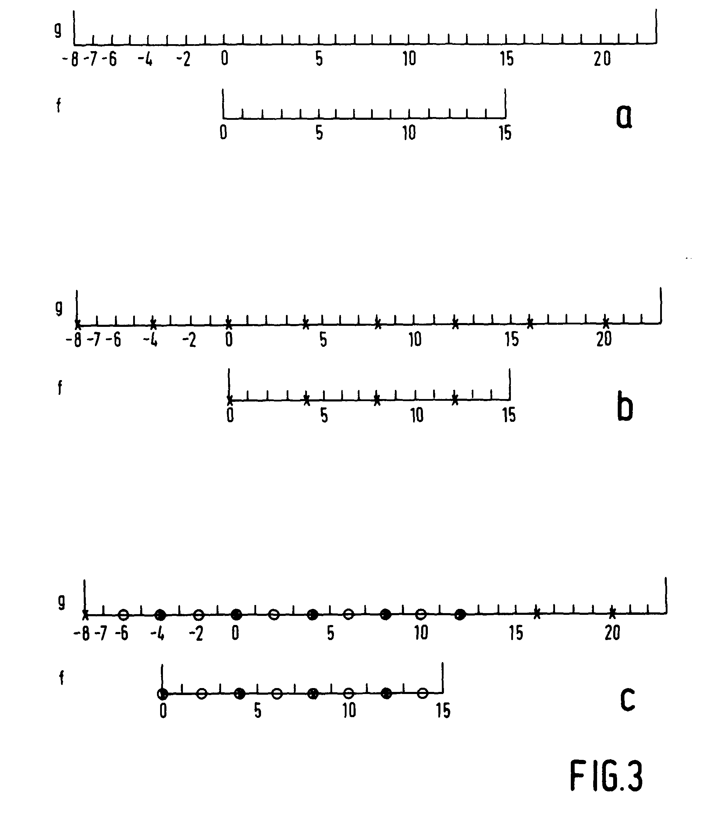

Fig. 3a zeigt zwei übereinander liegende Skalen, jeweils eine für g und eine für f. Die Zahlen auf der Skala geben die Adressen an, unter denen Abtastwerte von g und f im Speicher 1 abgelegt sind. Die Auswertung der Formel (1) läßt sich anschaulich durch Fig. 3a so deuten, daß die Abtastwerte von g und f, die unter übereinander stehenden Adressen abgelegt sind, miteinander multipliziert werden (F bedeutet also im Beispiel die Multiplikation) und die einzelnen Produkte dann aufsummiert werden. Da nominell gleiche Adressen untereinander stehen, bedeutet die in Fig. 3a gezeigte relative Lage der beiden Skalen, daß die Verschiebung $\mu$ in Formel (1) den Wert 0 hat. Wird $\mu = 1$ gewählt, so muß die untere Skale um eine Skaleneinheit nach links gerückt werden, damit die Deutung die gleiche bleiben kann. Für $\mu = p = 8$ stehen die Skalenanfänge übereinander, für $\mu = -p = -8$ die Skalenenden. Werden nun - gesteuert durch die Adreßsteuerung 3 - die Abtastwerte von g und f in steigender Folge der Adressen (angefangen bei g(-8) und f(O)) gleichzeitig aus dem Speicher 1 ausgelesen und an die Eingänge eines (bekannten) Korrelators nach Fig. 2 gegeben, so erhält man am Ende dieses Lesevorganges an den Ausgängen des Korrelators die Abtastwerte A(8) bis A(-8) der Korrelationsfunktion, vorausgesetzt der Korrelator nach Fig. 1 enthält 17 Stufen und das Auslesen der Abtastwerte von f erfolgt zyklisch. Nach Fig. 3a bedeutet daß, die untere Skala wird vom linken unteren Rand schrittweise zum rechten oberen Rand verschoben.

Dieses Vorgehen entspricht der direkten Auswertung der Formel (1). Die Ausgangsdaten des Korrelators 2 werden über eine Leitung 2a der Adreßsteuerung 3 zugeführt, die Mittel enthält, mit denen die extremalen Werte der Größen A(8) bis A(-8) durch Vergleich bestimmt werden. Die Lage zum Beispiel eines Extremums ist eindeutig an dem Ausgang des Korrelators 2 erkennbar, an dem es aufgetreten ist.

Es ist offensichtlich, daß für ein noch größeres p als in diesem Beispiel angegeben, die Anzahl der Stufen des Korrelators sehr groß wird, wenn man die direkte Auswertung von (1) beibehalten will. Daher wird für große p erfindungsgemäß analog den nun folgenden Ausführungen vorgegangen. Es wird eine Unterabtastung beider Signale im Verhältnis 1:4 vorgenommen, d.h. die Adreßsteuerung 3 sorgt dafür, daß nur jeder vierte Abtastwert der gespeicherten Abtastwerte ausgelesen und dem Korrelator 2 zugeführt wird. In Fig. 3b sind die Werte, die in diesem Fall ausgelesen werden, mit einem Kreuz versehen. Wieder erfolgt das Auslesen aller mit einem Kreuz versehenen Werte und deren Übertragung an den Korrelator 2 so, daß mit dem am weitesten links stehenden Kreuz in beiden Skalen begonnen wird. An den Ausgängen des Korrelators 3 stehen dann - allerdings nicht mit der höchst möglichen Genauigkeit - die Werte A(8), A(4), A(0), A(-4) und A(-8) an. Ist A(4) das Extremum dieser Werte - seine Lage ist also $\mu e1 = 4$ - so läßt sich dieses Ergebnis durch eine Stellung der beiden Skalen entsprechend Fig. 3c darstellen.

Nunmehr wird eine feinere Unterabtastung, nämlich 1:2 gewählt und - ausgehend von der zuvor gefundenen Lage $\mu e1 = 4$ des Extremums - in der Umgebung dieser Lage die Suche nach dem Extremum fortgesetzt. Die nun von der Adreßsteuerung 3 ausgelesenen Abtastwerte sind mit einem Kreis versehen, wie Fig. 3c zeigt. Das Auslesen aller mit einem Kreis versehenen Werte erfolgt wieder von links nach rechts. Der Korrelator 3 gibt dann die Abtastwerte A(6), A(4) und A(2) ab. Ist A(6) in diesem Fall das Extremum, wird in einer letzten Suche keine Unterabtastung mehr verwendet, jedoch die Abfrage auf A(7), A(6) und A(5) beschränkt.

Im allgemeinen Fall ist die Wirkungsweise der Schaltung nach Fig. 1 folgende:

In der Adreßsteuerung ist eine ganze Zahl n1 abgespeichert, die Teiler von p und Teiler von b ist. Die Adreßsteuerung ersetzt die Laufvariable i durch n1*i1 und die Verschiebung $\mu$ durch n1*$\mu$1. Die Laufvariable i1 durchläuft alle ganzzahligen Werte von 0 bis b1-1 mit b1 = b/n1 und $\mu$1 durchläuft alle ganzzahligen Werte von -p1 bis +p1 mit p1 = p/n1. Die Adreßsteuerung 3 erzeugt nun die so berechneten Adressen von f und g in steigender Reihenfolge. Die zugehörigen Abtastwerte werden demKorrelator 2 zugeführt, der die Werte A(-n1p1), A(-n1(p1-1)) bis A(n1p1) berechnet.

Die Adreßsteuerung 3 bestimmt sodann den Extremwert der Ähnlichkeitsfunktion und die zugehörige Verschiebung (Lage) dieses Wertes v0= n1*µ1e.

In der Adreßsteuerung ist weiterhin eine ganze Zahl n2 abgespeichert, die Teiler von n1 und Teiler von b ist. Die Adreßsteuerung 3 ersetzt das Argument von f in (1) durch n2∗i2 und das Argument von g durch n2∗i2-n2*µ2+vO. i2 durchläuft alle ganzzahligen Werte von 0 bis b/n2-1 und µ2 alle ganzzahligen Werte von -n1/n2-1 bis n1/n2-1. Wieder werden die so ermittelten Adressen in steigender Reihenfolge an den Speicher 1 übergeben und dann die zugehörigen Abtastwerte dem Korrelator 2 zugeführt. Hat die Adreßsteuerung durch Vergleich entschieden, für welchen Wert von µ2 A einen Extremwert annimmt, so ergibt sich als Lage v dieses Extremums v1 = v0+n2*µ2.

Entweder wird nun diese Lage des Extremums als endgültig weiterverwendet oder die aufgeführten Schritte werden mit einem noch kleineren Verhältnis der Unterabtastung wiederholt.

Im Korrelator nach Fig. 2 werden mit einem nicht näher angegebenen Takt die Abtastwerte von f auf die obere Eingangsleitung gegeben und die Abtastwerte von g auf die Leitung mit Verzögerungsgliedern D1, D2, D3 und D4. Funktionseinheiten K1 bis K5 führen die Verknüpfung F nach Formel (1) zwischen ihren Eingangsdaten aus. Die Werte dieser Verknüpfung werden durch Addierer A1 bis A5 und Akkumulatoren R1 bis R5 laufend aufsummiert, so daß sich an den Ausgängen Z1 bis Z5 Abtastwerte der Ähnlichkeitsfunktion ergeben.

**Patentansprüche**

1. Schaltungsanordnung zur Bestimmung der Lagen von Extremwerten einer Ähnlichkeitsfunktion zweier in digitaler Form vorliegender Signale f und g, bei der

   - Funktionswerte der beiden Signale f und g an Stellen ermittelt werden, die einer Unterabtastung der beiden Signale im Verhältnis 1:n1 entsprechen, wobei nl eine ganze Zahl zwischen 1 und p ist, und p die Zahl der Abtastzeitpunkte bezeichnet, während denen Funktionswerte vorliegen,

   - aus den ermittelten Funktionswerten mit Hilfe eines Korrelators (2) die ungefähren Lagen von Extremwerten bestimmt werden,

   - von beiden Signalen f und g Funktionswerte ermittelt werden, die einer Unterabtastung der beiden Signale im Verhältnis 1:n2 entsprechen, wobei n2 eine ganze Zahl und kleiner nl ist,

   - mit diesen zuletzt ermittelten Funktionswerten wiederum mit Hilfe des Korrelators (2) die bereits gefundenen Lage der Extremwerte genauer bestimmt werden, und

   - die Bestimmung der Lagen der Extremwerte mit laufend kleiner werdenden Zahlen nl und n2 gegebenenfalls wiederholt wird.

2. Schaltungsanordnung nach Anspruch 1,
   <u>gekennzeichnet durch</u>
   folgende Merkmale:

   a) einen adressierbaren Speicher (1), in dem die Funktionswerte der beiden Signale an vorgegebenen Stellen unter Speicheradressen abgelegt sind,
   b) eine Adreßsteuerung (3), mit deren Hilfe die Funktionswerte, der beiden Signale dem Korrelator (2) zugeführt werden,
   c) Mittel, mit denen die vom Korrelator berechneten Werte der Ähnlichkeitsfunktion und ihre zugehörigen Lagen gespeichert werden sowie Mittel, mit denen durch Vergleich die Extremwerte der vom Korrelator berechneten Ähnlichkeitsfunktion ermittelt werden,
   d)

   d.1 die Adreßsteuerung (3) erzeugt Adressen, durch die die im Verhältnis 1:n1 unterabgetasteten Signale an den Korrelator (2) abgegeben werden,
   d.2 die mit diesen unterabgetasteten Signalen bestimmten Lagen der Extremwerte werden abgespeichert,
   d.3 die Adreßsteuerung (3) erzeugt Adressen, durch die die im Verhältnis 1:n2 mit n2 kleiner n1 unterabgetasteten Signale an den Korrelator (2) abgegeben werden und die nur zur Bestimmung des Verlaufs der Ähnlichkeitsfunktionen einer vorbestimmten Umgebung der zuvor bestimmten Lagen der Extremwerte erforderlich sind,

d.4 in der vorbestimmten Umgebung werden die Lagen der Extremwerte der Ähnlichkeitsfunktion mit den im Verhältnis 1:n2 unterabgetasteten Signalen erneut bestimmt.

3. Schaltungsanordnung nach Anspruch 2,
dadurch gekennzeichnet,
daß die Adreßsteuerung (3) die angegebenen Schritte mit immer geringer werdenden Unterabtastung wiederholt.

## Claims

1. A circuit arrangement for defining the positions of extreme values of a correlation function of two signals f and g which are present in a digital form, in which

   - function values of the two signals f and g are determined at positions corresponding to a sub-sampling of the two signals in a ratio of 1:n1, in which n1 is an integral number between 1 and p and p denotes the number of sampling instants during which function values are present,
   - the approximate positions of extreme values are defined from the determined function values by means of a correlator (2),
   - function values of the two signals f and g are determined, corresponding to a sub-sampling of the two signals in a ratio of 1:n2, in which n2 is an integral number and smaller than n1,
   - the extreme-value positions already found are defined more accurately with these last-determined function values, again by means of the correlator (2), and
   - the definition of the extreme-value positions is repeated, if necessary, with continuously decreasing numbers n1 and n2.

2. A circuit arrangement as claimed in claim 1,
characterized by
the following features:

   a) an addressable memory (1) in which the function values of the two signals are stored at predetermined locations under memory addresses,
   b) an address control unit (3) with which the function values of the two signals are applied to the correlator (2),
   c) means by which the values of the correlation function computed by the correlator and their associated positions are stored, as well as means by which the extreme values of the correlation function computed by the correlator are obtained by way of comparison,
   d)

       d.1 the address control unit (3) generates addresses by which the signals sub-sampled in a ratio of 1:n1 are applied to the correlator (2),
       d.2 the positions of the extreme values defined by means of these sub-sampled signals are stored,
       d.3 the address control unit (3) generates addresses by which the signals sub-sampled in a ratio of 1:n2, with n2 being smaller than n1, are applied to the correlator (2) and which are required only for determining the variation of the correlation functions of a predetermined proximity of the previously determined extreme-value positions,
       d.4 in the predetermined proximity the extreme-value positions of the correlation function are redefined by means of the signals sub-sampled in a ratio of 1:n2.

3. A circuit, arrangement as claimed in claim 2, characterized in that the address control unit (3) repeats the indicated process steps in an increasingly smaller sub-sampling ratio.

## Revendications

1. Montage de circuit destiné à déterminer les positions de valeurs extrêmes d'une fonction de similitude de deux signaux se présentant sous forme numérique f et g, dans lequel

   - les valeurs des fonctions des deux signaux f et g sont déterminées à des endroits qui correspondent à un sous-échantillonnage des deux signaux dans le rapport 1:n1, sachant que n1 est un nombre entier compris entre 1 et p, et que p désigne le nombre d'instants d'échantillonnage, pendant lesquels leurs valeurs de fonctions sont présentes;

- les positions approximatives des valeurs extrêmes sont déterminées à partir des valeurs de fonctions déterminées à l'aide d'un corrélateur (2);
- les valeurs de fonctions des deux signaux f et g qui correspondent à un sous-échantillonnage des deux signaux dans le rapport 1:n2, sont déterminées, sachant que n2 est un nombre entier inférieur à n1;
- avec ces valeurs de fonctions déterminées en dernier lieu, à nouveau à l'aide du corrélateur (2) les positions déjà trouvées des valeurs extrêmes sont déterminées de manière plus précise, et
- la détermination des positions des valeurs extrêmes est répétée le cas échéant avec des nombres n1 et n2 de plus en plus petits.

2. Montage de circuit suivant la revendication 1, caractérisé par les particularités suivantes :

a) une mémoire adressable (1), dans laquelle les valeurs des fonctions des deux signaux sont placées à des endroits prédéterminés à certaines adresses de mémoire,
b) un dispositif de sélection d'adresse (3), avec l'aide duquel les valeurs des fonctions des deux signaux sont appliquées au corrélateur (2),
c) des moyens, avec lesquels les valeurs, calculées par le corrélateur, de la fonction de similitude et leurs positions associées sont mises en mémoire, ainsi que des moyens, avec lesquels les valeurs extrêmes de la fonction de similitude calculée par le corrélateur sont déterminées par comparaison,
d)

d. 1 le dispositif de sélection d'adresse (3) génère des adresses, par lesquelles les signaux sous-échantillonnés dans le rapport 1:n1 sont délivrés au corrélateur (2),
d.2 les positions des valeurs extrêmes déterminées avec ces signaux sous-échantillonnés sont mises en mémoire,
d.3 le dispositif de sélection d'adresse (3) génère des adresses, par lesquelles les signaux sous-échantillonnés dans le rapport 1:n2, avec n2 inférieur à n1, sont délivrés au corrélateur (2) et qui ne sont nécessaires que pour la détermination de l'allure des fonctions de similitude d'un voisinage prédéterminé des positions déterminées au préalable des valeurs extrêmes,
d.4 dans le voisinage prédéterminé, les positions des valeurs extrêmes de la fonction de similitude sont à nouveau déterminées avec les signaux sous-échantillonnés dans le rapport 1:n2.

3. Montage de circuit suivant la revendication 2, caractérisé en ce que le dispositif de sélection d'adresse (3) répète les étapes décrites avec un sous-échantillonnage de plus en plus petit.

FIG.1

FIG.2

FIG.3